# EUROPÄISCHE PATENTANMELDUNG

(11) **EP 2 639 110 A1**
(43) Veröffentlichungstag der Anmeldung: **18.09.2013**
(21) Anmeldenummer: 12075025.2
(22) Anmeldetag: 14.03.2012
(51) Int. Cl.: B60R 1/074

(54) **Antriebsanordnung für einen Außenrückspiegel eines Fahrzeugs**

(71) Anmelder: Magna Auteca AG, 8160 Krottendorf/Weiz (AT)
(72) Erfinder: Palvoelgyi, Martin, 8010 Graz (AT); Schadler, Bernhard, 8211 Oberrettenbach (AT); Fuchs, Reinhard, 8212 Pischelsdorf (AT)
(74) Vertreter: Rausch, Gabriele

(57) **Zusammenfassung**

Antriebsanordnung für einen Außenrückspiegel eines Fahrzeugs zum Bewegen eines Spiegelkopfes relativ zu einem mit dem Fahrzeug verbundenen Spiegelfuß (25) aus einer Fahrstellung in eine Parkstellung und umgekehrt umfassend einen mit dem Spiegelfuß (25) verbundenen feststehenden Teil, einen mit dem Spiegelkopf verbindbaren und ein Gehäuse (5) aufweisenden, um eine Drehachse (2) beweglichen Teil, wobei der bewegliche und der feststehende Teil jeweils Verrastungskonturen (18,19) aufweisen, die die Fahrstellung festlegen, eine Druckfeder (12) zum Vorspannen des beweglichen und des feststehenden Teils zueinander, einen Antrieb zum Ausführen der Bewegung zwischen dem feststehenden und dem beweglichen Teil, der zumindest einen Elektromotor (10) und ein mit diesem in Wirkverbindung stehendes Zahnrad (8) mit Vorsprüngen (26) aufweist. Der feststehende Teil umfasst ein Fußteil (3) mit einem, dem Zahnrad (8) zugewandten Ringansatz (15) mit einer Kontur (16). Das Gehäuse (5) weist eine Öffnung auf und zwischen Zahnrad und einem die Öffnung umgebenden Gehäuseteil (4) ist ein drehfest mit dem Fußteil (3) verbundener, aber axial verschiebbarer Verspannring (6) mit Auflagekonturen (21) für die Vorsprünge (26) des Zahnrades (8) angeordnet. Die Kontur (16) des Ringansatzes (15) und die Auflagekonturen (21) des Verspannrings (6) sind so aneinander angepasst, dass in der Fahrstellung die Vorsprünge (26) des Zahnrades (8) auf den Auflagekonturen (21) des Verspannrings (6) aufliegen zum Übertragen der Kraft der Druckfeder (12) über das Gehäuseteil (4) auf den feststehenden Teil für eine sichere Verrastung, wobei bei Erregen des Motors (10) zum Bewegen des Spiegelkopfes in die Parkstellung das Zahnrad (8) mit den Vorsprüngen (26) unter Ausnutzung eines Freigangs des Zahnrads (8) bezüglich des Verspannringes (6) auf die Kontur (16) des Ringansatzes (15) des Fußteils (3) zur Aufnahme der Kraft der Druckfeder (12) läuft und Verspannring (6) und Gehäuseteil (4) zum Lösen der Verrastung axial anhebbar sind.

## Beschreibung

Die Erfindung betrifft eine Antriebsanordnung für einen Außenrückspiegel eines Fahrzeugs nach dem Oberbegriff des Hauptanspruchs.

Im Stand der Technik ist eine Vielzahl von Antriebsanordnungen für Rückspiegel eines Kraftfahrzeugs bekannt, mittels denen ein das Spiegelglas tragender Spiegelkopf aus einer Fahrstellung, bei der der Außenspiegel zu der Mittelachse des Kraftfahrzeugs ausgeklappt ist, in eine Parkstellung, bei der der Spiegelkopf in Richtung der Mittelachse des Fahrzeugs bewegt wird, gebracht wird und umgekehrt. Üblicherweise befindet sich zwischen dem Spiegelkopf und dem Spiegelfuß ein Spalt, der während der Fahrt Windgeräusche erzeugen kann. Um diese Geräusche zu verhindern, wird teilweise dazu übergegangen, diesen Spalt mittels einer Dichtung abzudichten. Dies führt jedoch aufgrund der höheren Reibung zu einem höheren Beiklappmoment und damit zu einer höheren Stromaufnahme des Antriebsmotors. Außerdem führt die wiederholte Relativbewegung zu einem verstärkten Verschleiß und damit einer geringeren Lebensdauer der Dichtung.

In der EP 0 931 699 A1 wird zur Lösung dieses Problems vorgeschlagen, den Spiegelkopf bei der Bewegung von der Fahrstellung in die Parkstellung relativ zum Spiegelfuß anzuheben, wobei das Anheben mittels zweier jeweils fest mit dem Spiegelfuß und dem Spiegelkopf verbundener und um die Drehachse angeordneter Ringe realisiert wird, die jeweils Rampen und Nuten aufweisen, die in der Fahrstellung ineinandergreifen und die beim Drehen in die Parkstellung aufeinander gleiten und dabei den Kopf vom Spiegelfuß anheben. Eine solche Funktion wird als "Lift and Turn" (Heben und Drehen) bezeichnet. Bei der genannten Antriebsvorrichtung, wie auch in anderen Vorrichtungen nach dem Stand der Technik, umfasst die Antriebsvorrichtung eine Druckfeder, die für eine durch Verrastungen am Spiegelkopf und am Spiegelfuß gebildete Sicherheitskupplung verwendet wird und die gleichzeitig den Spiegelkopf gegen den Spiegelfuß drückt und diesem dadurch Stabilität verleiht. Beim elektrischen Beiklappen und vor allem beim "Lift and Turn" behindert die Druckfeder eine Bewegung des Spiegels und bewirkt dadurch eine erhöhte Stromaufnahme.

Die bekannten Antriebsvorrichtungen müssen auch ein manuelles Bei-, Aus- und vorklappen zulassen, bei dem der Spiegelkopf mechanisch relativ zum Spiegelfuß bewegt wird, wobei die Kraft, die hierfür benötigt wird, ein vorgegebenes Maß nicht überschreiten darf. Dies wird durch die mittels der Druckfeder vorgespannten Sicherheitskupplung gelöst. Wenn ein Nutzer, nachdem der Spiegelkopf elektrisch beigeklappt wurde, versucht, den Spiegel manuell auszuklappen und in Fahrstellung zu bringen, kommt es im Stand der Technik häufig vor, dass er keinen Anschlag bzw. Raste findet, die ihm das Erreichen der Fahrstellung anzeigt. Der Spiegelkopf ist dann zwischen Parkstellung und vorgeklappter Stellung lose bewegbar.

Der Erfindung liegt die Aufgabe zugrunde, eine Antriebsanordnung für einen Außenrückspiegel eines Fahrzeugs zu schaffen, die einfach in ihrem Aufbau ist, eine "Lift and Turn" (Anheben und Drehen)-Funktion umfasst und die sowohl im elektrischen Betrieb als auch im manuellen Ausklappen eine Verrastung für die Fahrposition zur Verfügung stellt.

Diese Aufgabe wird erfindungsgemäß durch die kennzeichnenden Merkmale des Hauptanspruchs in Verbindung mit den Merkmalen des Oberbegriffs gelöst.

Durch die in den Unteransprüchen angegebenen Maßnahmen sind vorteilhafte Weiterbildungen und Verbesserungen möglich.

Die Erfindung umfasst eine Antriebsanordnung für einen Außenrückspiegel eines Fahrzeugs zum Bewegen eines Spiegelkopfes relativ zu einem mit dem Fahrzeug verbundenen Spiegelfuß aus einer Fahrstellung in eine Parkstellung und umgekehrt. Dabei umfasst die Antriebsanordnung einen mit dem Spiegelfuß verbundenen feststehenden Teil, einen mit dem Spiegelkopf verbindbaren und ein Gehäuse aufweisenden, um eine Drehachse beweglichen Teil, wobei der bewegliche und der feststehende Teil jeweils Verrastungskonturen aufweisen, die die Fahrstellung festlegen. Eine Druckfeder spannt den beweglichen und den feststehenden Teil zueinander in die Fahrstellung vor. Die Antriebsanordnung umfasst weiterhin einen Antrieb zum Ausführen der Bewegung zwischen dem feststehenden und dem beweglichen Teil, der zumindest einen Elektromotor und ein mit diesem in Wirkverbindung stehendes Zahnrad mit Vorsprüngen aufweist. Der feststehende Teil umfasst ein Fußteil mit einem dem Zahnrad zugewandten, vorzugsweise zylindrisch ausgebildeten Ringansatz mit einer Kontur, wobei das Gehäuse eine Öffnung für den Durchgriff des Ringansatzes aufweist. Zwischen Zahnrad und einem die Öffnung umgebenden Gehäuseteil ist ein drehfest mit dem Fußteil verbundener, aber axial verschiebbarer Verspannring mit Auflagekonturen zur Abstützung der Vorsprünge des Zahnrads angeordnet. Die Kontur des Ringansatzes und die Auflagekonturen des Verspannrings sind in ihren Niveaus so aneinander angepasst, dass in der Fahrstellung die Vorsprünge des Zahnrades auf den Auflagekonturen des Verspannrings aufliegen zum Übertragen der Kraft der Druckfeder über das Gehäuseteil auf den feststehenden Teil für eine sichere Verrastung. Bei Erregen des Motors zum Bewegen des Spiegelkopfes in die Parkstellung läuft das Zahnrad mit den Vorsprüngen unter Ausnutzung eines Freigangs des Zahnrads bezüglich des Verspannrings auf die Konturen des Ringansatzes des Fußteils zur Aufnahme der Kraft der Druckfeder, wodurch Verspannring und Gehäuseteil zum Lösen der Verrastung axial anhebbar sind. Der Freigang wird dabei von der Kontur des Ringansatzes und der Ablaufkontur vorgegeben.

Durch diese erfindungsgemäße Anordnung des mit dem Fußteil drehfest, aber axial zu diesem bewegbaren Verspannrings und des Ringansatzes des Fußteils liegen die Vorsprünge des Abtriebszahnrades in der Fahrstellung auf den Auflagekonturen des Verspannringes auf, wodurch eine sichere Verrastung zwischen beweglichem Teil und Fußteil gewährleistet wird, da die Kraft der Druckfeder direkt über den Verspannring und das Gehäuseteil auf den feststehenden Teil übertragen wird. Dadurch, dass beim Überführen des Spiegelkopfes aus der Fahrstellung in die Parkstellung das Zahnrad erst einen Freigang durchläuft, wodurch die Vorsprünge des Abtriebszahnrads auf den Ringansatz bewegt werden, wird die Kraft direkt von dem Ringansatz, der Bestandteil des Fußteils ist, aufgenommen, wodurch Verspannring und Gehäuseteil von der Kraft der Druckfeder befreit werden und wodurch, da die Vorsprünge des Zahnrades jeweils an einen Anschlag der Kontur des Ringansatzes treffen, das Gehäuse mit dem Spiegelkopf um das Abtriebszahnrad bewegt wird und Verspannring und Gehäuseteil zum Lösen der Verrastung axial anhebbar sind. Somit wird eine konstruktive Möglichkeit zur Verfügung gestellt, die Kraft der Feder vor bzw. während der Klappbewegung umzuleiten, so dass diese nicht mehr auf den Spiegelkopf wirkt. Die benötigte elektrische Leistung, die bei konstanter Spannung durch den Strom bestimmt wird, um den Spiegel zu bewegen, wird dadurch stark verringert.

Dadurch, dass der Verspannring drehfest mit dem Fußteil, aber axial verschiebbar zu diesem angeordnet ist, wird beim manuellen Ausklappen aus der elektrischen Beiklappstellung das Abtriebszahnrad durch die Getriebeselbsthemmung mitgenommen und fährt auf den angehobenen Verspannring auf, wodurch die Druckfeder stark vorgespannt wird und bei Erreichen der Fahrstellung die Verrastung mit dem Fußteil bewirkt. In vorteilhafter Weise wird beim nächsten elektrischen Betätigen das Abtriebszahnrad auf dem Verspannring verdreht bis es seine Ausgangsstellung wieder erreicht.

In einem bevorzugten Ausführungsbeispiel weist das Fußteil eine flanschartige, den Ringansatz umgebende Scheibe auf und die Verrastungskonturen des feststehenden Teils sind in der Scheibe ausgebildet. Durch diese Ausführungsform wird eine kompakte Anordnung erreicht. Es ist jedoch auch denkbar, dass das Fußteil, das mit dem Spiegelfuß fest verbunden wird, ohne die umgebende Scheibe ausgebildet ist, wobei die Verrastungskonturen dann direkt an dem Spiegelfuß angeordnet sind.

Für eine konstruktiv einfache drehfeste Verbindung zwischen Ringansatz des Fußteils und Verspannring, die gleichzeitig eine axiale Verschiebung zulässt, sind an dem Ringansatz und an dem Verspannring Führungselemente angeordnet. Diese können einerseits als in den zylindrischen Wänden des Ringansatzes vorgesehene Schlitze und andererseits als an dem Verspannring nach innen gerichtete Erhebungen ausgebildet sein, wobei die Erhebungen in den Schlitzen geführt sind. Es ist jedoch auch denkbar, dass auf der zylindrischen Außenfläche des Ringansatzes axial gerichtete Vertiefungen angeordnet werden, die mit korrespondierenden Erhebungen am Verspannring zusammenarbeiten.

In vorteilhafter Weise sind der Verspannring und das Fußteil so zueinander angeordnet, dass der Verspannring den Ringansatz umgreift.

Um eine Umleitung der Kraft der Druckfeder von dem Verspannring auf den Ringansatz des Fußteils und umgekehrt zu gewährleisten, liegt die Kontur des Ringansatzes, die in der Stirnfläche des Ansatzes ausgebildet ist, im Bereich des Freiganges des Zahnrads auf einem in Bezug auf die Auflagekonturen des Verspannrings höheren Niveau. Dadurch wird bei Erregen des Motors das Zahnrad in konstruktiv einfacher Weise auf die Kontur bzw. die Stirnfläche des Ringansatzes bewegt.

Für die Definition der Fahrposition liegen die Auflagekonturen des Verspannringes in der Fahrposition auf einem in Bezug auf die Kontur bzw. die Stirnfläche des Ringansatzes höheren Niveau, wodurch die Kraft über den Verspannring und das Gehäuseteil auf den feststehenden Teil übertragen wird. Für die notwendigen Verbindungen zwischen Zahnrad und Ringansatz bzw. Verspannring weist die Stirnfläche des Ringansatzes der Fußscheibe mindestens eine dem Zahnrad zugewandte Vertiefung auf. In ähnlicher Weise weisen die Auflagekonturen des Verspannringes mindestens eine dem Zahnrad zugewandte abgestufte Einbuchtung auf. Dabei dient der höher gelegene Bereich der Einbuchtung zur Aufnahme eines Vorsprungs des Zahnrads in der Fahrposition, während der niedrigere Bereich der Abstufung der Einbuchtung zur Aufnahme des Vorsprungs beim axialen Verschieben des Verspannrings beim Lösen der Verrastung zwischen beweglichem Teil und feststehendem Teil der Antriebsanordnung dient.

Der vorgegebene Freigang des Zahnrades wird durch die Vertiefung der Kontur bzw. in der Stirnfläche des Ringansatzes definiert, wobei die seitliche Begrenzungsfläche der Vertiefung einen Anschlag zur Vorgabe des Endes des Freigangs bildet. Vorzugsweise ist ein identischer Anschlag an der gegenüberliegenden Seite der Vertiefung angeordnet, der dieselbe Funktion für einen Spiegel auf der gegenüberliegenden Seite des Fahrzeugs aufweist. Das Fußteil hat somit eine für linke und rechte Außenspiegel identische und für jede Vertiefung der Kontur symmetrische Ausführung.

In bevorzugter Weise weist die abgestufte Einbuchtung des Verspannrings einen abgestuften Bereich mit einer sich auf die Bodenfläche der Einbuchtung anschließenden geneigten oder schrägen Anschlagfläche, an die sich eine Stufe anschließt, auf. Dabei dient die Stufe zur Abstützung der Federkraft in Fahrstellung und die geneigte oder schräge Anschlagfläche begrenzt den Freigang des Zahnrades beim Ausklappen.

Eine weitere bevorzugte Ausführungsform umfasst eine erste und zweite Schrägfläche als Begrenzung der Einbuchtung, wobei die erste Schrägfläche Bestandteil einer Sicherheitskupplung in Vorklapprichtung ist und die zweite Schrägfläche, die sich an die Stufe anschließt, Bestandteil einer Sicherheitskupplung in Beiklapprichtung ist.

Ausführungsbeispiele der Erfindung sind in der Zeichnung dargestellt und werden in der nachfolgenden Beschreibung näher erläutert. Es zeigen:
- Fig. 1: eine perspektivische Ansicht der erfindungsgemäßen Antriebsanordnung in Explosionsdarstellung,
- Fig. 2: eine perspektivische Darstellung der erfindungsgemäßen Antriebsanordnung im Zusammenbau in der Fahrposition,
- Fig. 3: eine schematische Abwicklung eines Teils der erfindungsgemäßen Antriebsanordnung in der Fahrposition,
- Fig. 4: eine Ansicht gemäß Fig. 2, jedoch bei Be- ginn des Beiklappens,
- Fig. 5: eine schematische Abwicklung von Teilen der Antriebsanordnung entsprechend Fig. 4,
- Fig. 6: eine Ansicht gemäß Fig. 4 während des Beiklappens,
- Fig. 7: eine schematische Abwicklung von Teilen des Antriebs entsprechend der Stellung nach Fig. 6,
- Fig. 8: eine perspektivische Ansicht der Antriebsanordnung beim manuellen Ausklappen, und
- Fig. 9: eine schematische Abwicklung von Teilen der Antriebsanordnung in der Stellung der Antriebsanordnung gemäß Fig. 8.

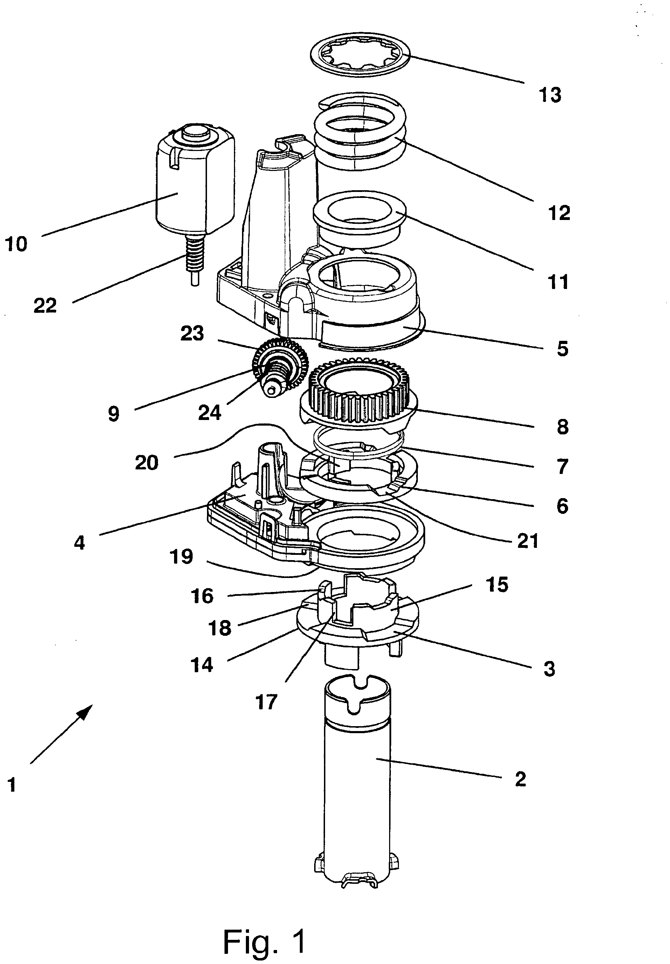

Die in Fig. 1 dargestellte erfindungsgemäße Antriebsanordnung 1, die auch als Beiklappantrieb bezeichnet wird, umfasst einen feststehenden Teil und einen beweglichen Teil, wobei der feststehende Teil mit einem Spiegelfuß fest verbunden wird, der üblicherweise an einem Kraftfahrzeug angebracht ist. Der bewegliche Teil ist mit einem Spiegelkopf verbunden, der in Bezug auf den Spiegelfuß drehbar angeordnet ist. Die Antriebsanordnung weist entsprechend den in der Fig. 1 dargestellten Komponenten eine als Drehachse dienende Hülse 2, ein Fußteil 3, das als Fußscheibe ausgebildet ist, einen Gehäusedeckel 4, der mit einem Gehäuse 5 verbunden ist und dieses verschließt, einen Verspannring 6 mit einer schwachen Druckfeder 7, ein Abtriebszahnrad 8, das über eine Zwischenwelle 9 von einem Elektromotor 10 angetrieben wird, eine Federauflage 11 für eine Druckfeder 12 und eine mit der Hülse 2 verbundene Klemmscheibe 13. Wie in den folgenden Figuren gezeigt wird, durchgreift die Hülse 2 die dargestellten Komponenten 3, 4, 5, 6, 7, 8, 11, 12 und 13, wobei die Hülse selbst ortsfest mit dem Spiegelfuß verbunden ist.

Die Fußscheibe 3, die Bestandteil des feststehenden Teils der Antriebsanordnung 1 bzw. des Beiklappantriebs ist, weist einen flanschartigen Kragen bzw. eine flanschartige Scheibe 14 auf, von dessen innerem Rand sich ein im Wesentlichen zylindrischer Ringansatz 15 axial erstreckt, der auf seiner Stirnfläche 16 mit einer Kontur (wird weiter unten erläutert) versehen ist und der in seiner zylindrischen Wand Ausnehmungen oder Schlitze 17, im vorliegenden Fall drei, die in axialer Richtung eingearbeitet sind, aufweist. Die flanschartige Scheibe 14 ist mit Verrastungserhebungen 18 versehen, die mit entsprechenden Vertiefungen 19 an der Unterseite des die Hülse 2 umgebenden Teils des Deckels 4 zusammenarbeiten. Diese Verrastungsvertiefungen 19 und -erhöhungen 18 bilden eine Verrastung des feststehenden Teils der Antriebsanordnung mit ihrem beweglichen Teil in der Fahrposition des Außenspiegels eines Kraftfahrzeugs, der mit dem Beiklappantrieb ausgerüstet ist. Der Deckel 4 sowie das Gehäuse 5 mit dem Motor und der Zwischenwelle 9 sind Bestandteil des beweglichen Teils der Antriebsanordnung. Der Verspannring 6, der den Ringansatz 15 der Fußscheibe 3 umgreift, weist auf seiner Innenfläche nach innen gerichtete Ansätze 20 auf, die mit den Schlitzen 17 des Ringansatzes 15 korrespondieren, wobei die Ansätze 20 und die Schlitze 17 axiale Führungen bilden. Durch diese Führungen 17, 20 ist der Verspannring 6 drehfest mit der Fußscheibe 3 verbunden, aber axial zu dieser bewegbar. Auf der Oberseite des Verspannrings 6, dem Abtriebszahnrad 8 zugewandt sind Auflagekonturen 21 ausgebildet, die später genauer erläutert werden. Die Feder 7 wird im Inneren des Verspannrings 6 aufgenommen. Der Deckel 4 ist zum Verspannring 6 frei drehbar.

Auf der Ausgangswelle des Motors 10 ist eine Schnecke 22 aufgepresst, die mit einem Schneckenrad 23 der Zwischenwelle 9 im Eingriff ist, wobei eine weitere Schnecke 24 auf der Zwischenwelle mit dem Abtriebszahnrad 8 im Eingriff steht. Das Abtriebszahnrad 8 steht bis auf einen Freigang (wird später erläutert) fest, so dass sich bei Erregen des Motors und entsprechender Übertragung der Bewegung des Motors über die Zwischenwelle auf das Zahnrad 8 der Deckel 4 mit dem Gehäuse 5, die Bestandteile des beweglichen Teils des Beiklappantriebs sind, um die Drehachse, d.h. um die Hülse 2 bewegen.

Die Druckfeder 12, die zwischen der mit dem Gehäuse 5 verbundenden Federauflage 11 und der mit der Hülse 2 verbundenen Klemmscheibe 13 liegt, gibt eine axiale Kraft vor, die auf die Verrastung 18, 19 zwischen Gehäusedeckel 4 und Fußscheibe 3 wirkt.

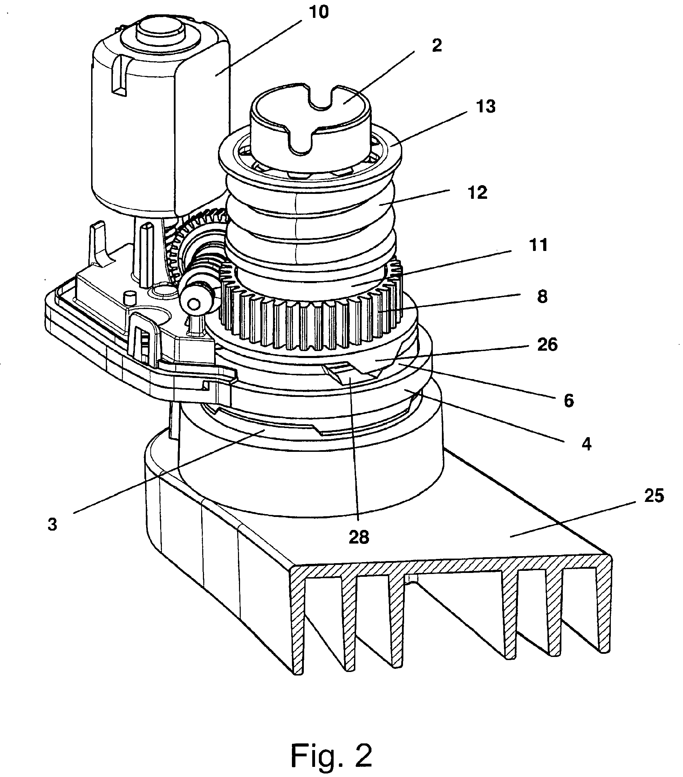

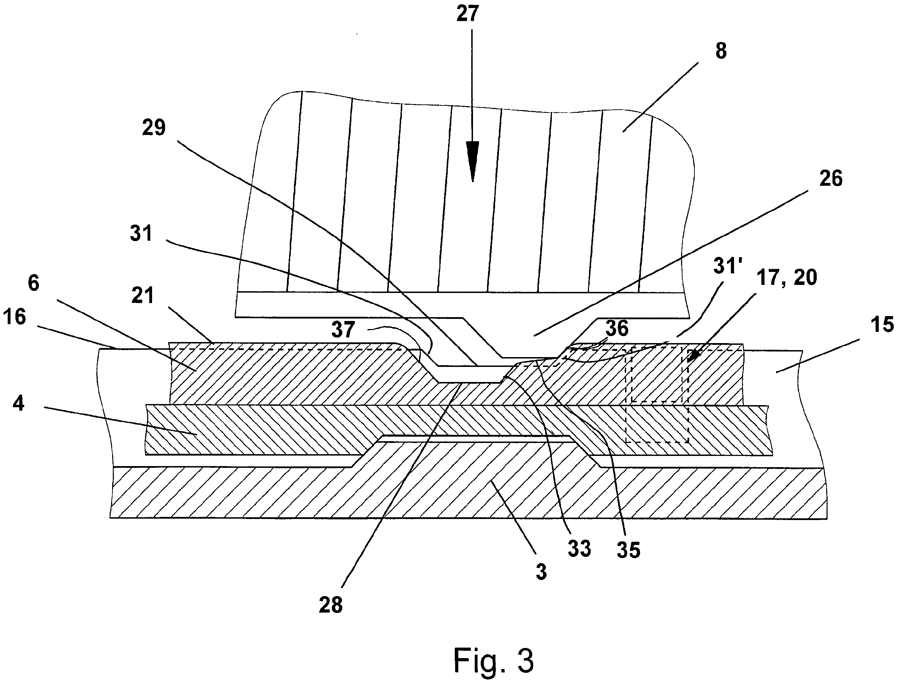

Die Fign. 2 und 3 zeigen die Antriebsanordnung, bzw. Teile davon, in einer ersten Stellung des beweglichen Teils zu dem feststehenden Teil des Außenrückspiegels, wobei diese Stellung die Fahrposition ist. In Fig. 2 ist die Antriebsanordnung in ihrem zusammengebauten Zustand zu erkennen, wobei das Gehäuse 5 der Übersichtlichkeit halber weggelassen ist. Die Fußscheibe 3 ist im vorliegenden Fall fest mit dem Spiegelfuß 25 verbunden. Der Deckel 4 ist mit der Fußscheibe 3 verrastet und die Vorsprünge 26 des Abtriebszahnrades 8 liegen jeweils auf den Auflagekonturen 21 des Verspannrings 6 auf. Dies ist genauer in Fig. 3 zu erkennen, die die Abwicklung der Fußscheibe 3 des Deckels 4, des Verspannrings 6 und des Antriebszahnrads 8 zeigt.

Wie aus den Fign. 1 bis 3 zu erkennen ist, weist die Stirnfläche 16 des Ringansatzes 15 im Ausführungsbeispiel drei Vertiefungen 29 auf, die von Anschläge 31, 31' bildenden geneigten Seitenwänden in Umfangsrichtung eingefasst sind. Die Anschläge 31, 31' dienen als Begrenzung eines Freiganges des Zahnrades 8, wenn die Antriebsanordnung entweder für den linken Seitenspiegel eines Fahrzeugs (Anschlag 31) oder für den rechten Spiegel (Anschlag 31') verwendet wird. Die Bodenflächen der Vertiefungen 29 stützen die Vorsprünge 26 des Abtriebszahnrades 8 beim elektrischen Ein- und Ausklappen eines Spiegels ab.

Die Auflagekonturen 21 des Verspannrings 6 weisen drei abgestufte Einbuchtungen 28 auf, wobei der abgestufte Bereich eine Anschlagfläche 33, eine Stufe 35 und eine zweite Schrägfläche 36 umfasst und die Einbuchtung 28 in der einen Umfangsrichtung begrenzt. In der anderen Umfangsrichtung wird die Einbuchtung 28 von einer ersten Schrägfläche 37 begrenzt. Die Schrägflächen 36, 37 dienen einer Sicherheitskupplung in Vorklapprichtung und in Beiklapprichtung eines Spiegels. Der Boden der Einbuchtungen hat lediglich die Funktion der Freistellung.

Entsprechend Fig. 2 und Fig. 3 drückt die Druckfeder 12 über die Federauflage 11 auf das Abtriebszahnrad 8, wobei die Federkraft in Fig. 3 mit dem Pfeil mit Bezugszeichen 27 bezeichnet ist. Das Zahnrad 8 steht mit den auf seiner Unterseite vorhandenen Vorsprüngen 26 auf dem Verspannring 6, der wiederum den Deckel 4 auf den Spiegelfuß 25 bzw. die Fußscheibe 3 drückt.

Die Vorsprünge 26 des Abtriebszahnrads 8 liegen in der Fahrposition auf der Stufe 35 des abgestuften Bereichs der Einbuchtung 28 auf. Die Vertiefungen 29 der Stirnfläche 16 des Ringansatzes 15 und die Einbuchtungen 28 der Auflagekonturen 21 des Verspannrings 6 stimmen in ihrer Lage auf dem jeweiligen Umfang im Wesentlichen bzw. zum größten Teil überein. In der in Fig. 3 dargestellten Fahrposition liegt die Stufe 35 des abgestuften Bereichs der Einbuchtung 28 in Bezug auf den Boden der Vertiefung 29 des Ringansatzes 15 auf einem höheren Niveau, so dass die Vorsprünge 26 des Abtriebszahnrades auf dem abgestuften Bereich der Einbuchtung 28 aufliegen, wodurch die Federkraft 27 der Druckfeder 12 über das Abtriebszahnrad 8, den Verspannring 6, den Deckel 3 auf die Fußscheibe 3 bzw. den Spiegelfuß 25 gelenkt wird. Dadurch sind der Deckel 4 und die Fußscheibe 3 durch Verrastung, die eine Sicherheitskupplung bildet, miteinander verbunden. Die Druckfeder 12 und die Geometrie der Verrastung 18, 19 sind hierbei so ausgelegt, dass der Motor 10 zu schwach ist, um die Verrastung zu lösen.

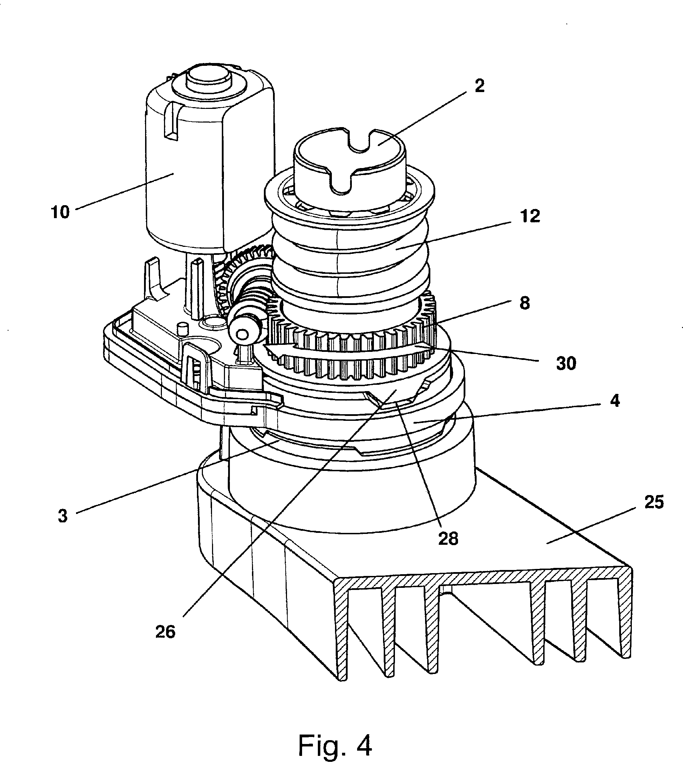

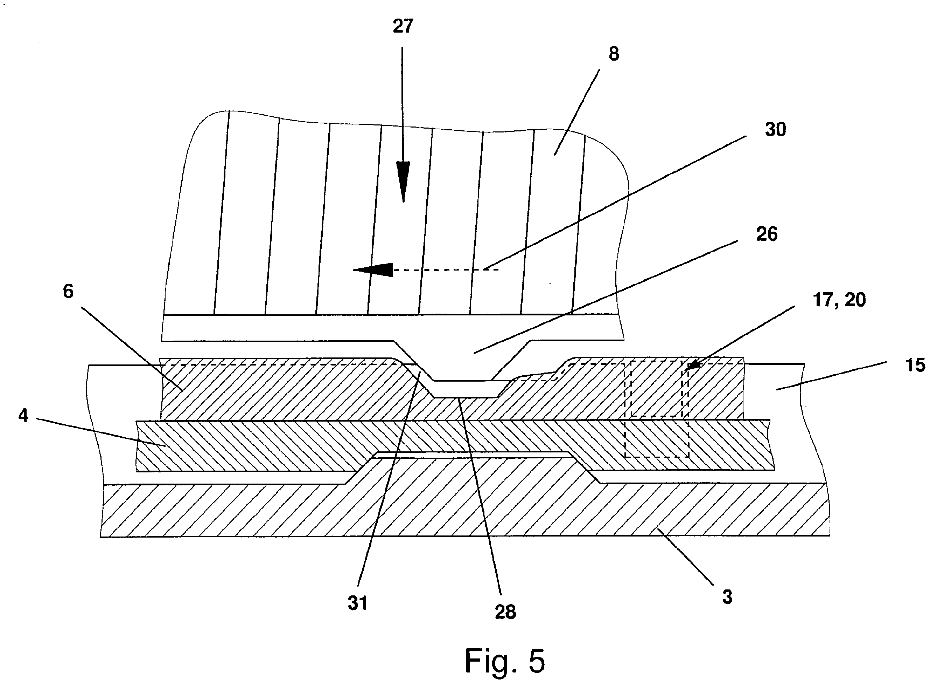

Die Fign. 4 und 5 zeigen den Moment des Bestromens des Motors, d.h. den Beginn des Beiklappvorgangs, wobei sich der bewegliche Teil des Beiklappantriebs durch die Verrastung zwischen Deckel 4 und Fußscheibe 3 nicht bewegen kann. Das Abtriebszahnrad 8 hat jedoch entgegen der Ab- bzw. Beiklapprichtung, also in Richtung des Pfeils 30 in Fig. 5, anfangs keinen Anschlag, um das Stützmoment aufzubringen, es hat daher bezüglich des Verspannrings 6 einen gewissen Freigang. Das Abtriebszahnrad 8 dreht sich nun entgegen der Abklapprichtung in die durch den Pfeil 30 bezeichnete Richtung bis die Vorsprünge 26 jeweils auf den die Vertiefung 29 in der Stirnfläche 16 des Ringansatzes 15 begrenzenden Anschlag 31 treffen. Die Vorsprünge 26 stützen sich nun jeweils an dem Boden der Vertiefungen 29 und den Anschlägen 31 des Ringansatzes 15 der Fußscheibe 3 ab, wodurch die Federkraft 27 der Druckfeder 12 nun vom zylindrischen Ringansatz 15 der Fußscheibe 3 getragen wird. Dabei ist zu beachten, dass der Boden der Vertiefung 29 des Ringansatzes 15 in Bezug auf den Boden der Einbuchtung 28 des Verspannrings auf einem höheren Niveau liegt. Da die Federkraft nun direkt auf den Ringansatz 15 bzw. die Fußscheibe 3 wirkt, können der Deckel 4 und der Verspannring 6 ungehindert nach oben wandern und die Verrastung zwischen Deckel 4 und Fußscheibe 3 kann sich lösen. Dadurch ist ein Abklappen des beweglichen Teils der Antriebsanordnung, d.h. des mit dem Gehäuse 5 und dem Deckel 4 verbundenen Spiegelkopfs in Bezug auf den Spiegelfuß bzw. die Fußscheibe möglich.

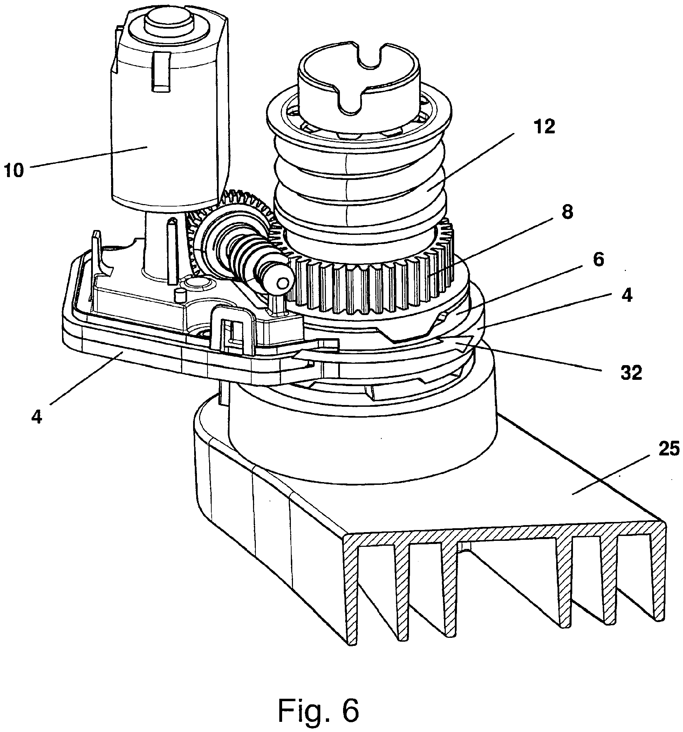

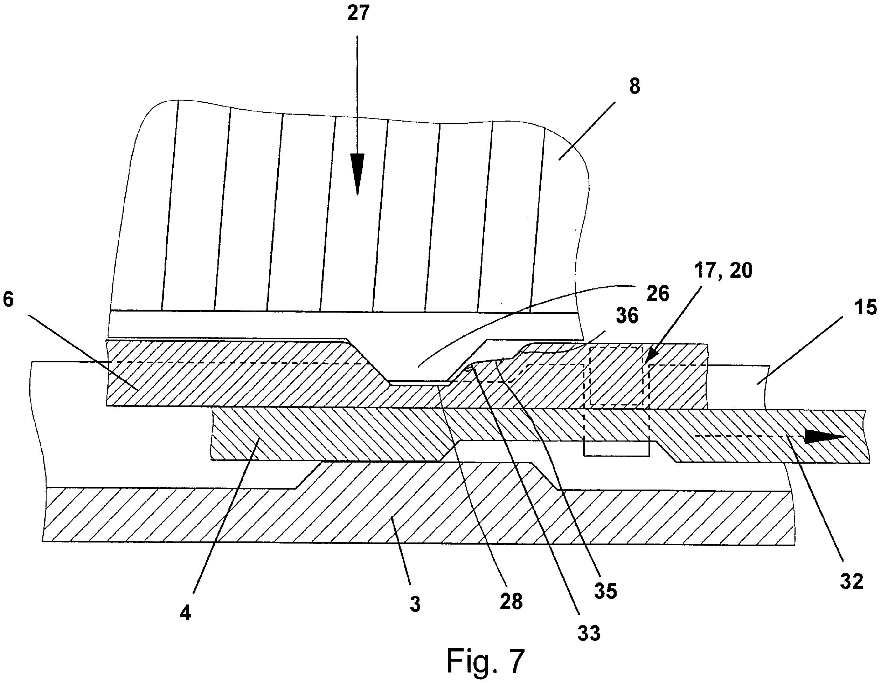

In Fign. 6 und 7 ist nun der Beiklappvorgang dargestellt. Der Verspannring 6 und der Deckel 4 und damit der restliche Antrieb, d.h. Motor 10 und Zwischenwelle 9 und dergleichen und auch der Spiegelkopf, haben sich beim Lösen der Verrastung gehoben und der Deckel 4 bewegt sich um das feststehende Abtriebszahnrad 8 in Richtung des eingezeichneten Pfeils 32. Dadurch wird die "Lift and Turn"-Funktion realisiert. Wie insbesondere aus Fig. 7 zu erkennen ist, hat sich der Verspannring 6 über die axiale Führung 17, 20 nach oben verschoben. Die Hebehöhe des Verspannrings 6 wird über die Rampenhöhe der Verrastung des Deckels 4 mit der Fußscheibe bestimmt. Im gehobenen Zustand wirkt die Federkraft weiterhin direkt auf die Fußscheibe 3, d.h. zwischen Verspannring 6 und den Vorsprüngen 26 des Abtriebszahnrades 8 ist ein Spiel vorgesehen. Die Federkraft wirkt nur bei der Verrastung in der Fahrstellung bzw. beim manuellen Ausrasten (double detent) auf den Verspannring 6. Der bewegliche Teil der Antriebsanordnung fährt so weit in die Parkstellung bis seine Bewegung durch einen die Parkstellung vorgebenden Anschlag beendet wird.

Wenn nun der Spiegelkopf wieder elektrisch ausgeklappt werden soll, wird entsprechend der Motor 10 aktiviert, wobei der geneigte Anschlag 33 (Fig. 7), der im Bereich der Vertiefung 28 des Verspannrings 6 Teil des abgestuften Bereichs ist, ein vorzeitiges Durchfahren des Freigangs des Abtriebszahnrads 8 verhindert. Der Deckel 4 zusammen mit dem Antrieb und dem Spiegelkopf bewegt sich nun entgegen der in Fign. 6 und 7 mit 32 bezeichneten Richtung aus der Parkstellung in die Fahrposition. Erst wenn aufgrund der genannten Bewegung die Verrastung zwischen Deckel 4 und Spiegelfuß bzw. Fußscheibe 3 wieder in Eingriff kommt, wird der Freigang durchfahren und das Abtriebszahnrad 8 fährt wieder auf den Verspannring 6 bzw. auf den abgestuften Bereich der Vertiefung 28 auf. Die Federkraft 27 wirkt wieder auf den Deckel 4 und spannt ihn damit gegen den Spiegelfuß 25 bzw. die Fußscheibe 3. Da der Motor 10 so ausgelegt ist, dass er zu schwach ist, die Verrastung zu lösen, verbleibt der Antrieb in dieser Stellung, die die Fahrstellung ist.

In Fig. 1 ist eine schwache Druckfeder 7 zwischen dem Abtriebszahnrad 8 und dem Verspannring 6 angeordnet, diese ist jedoch nicht zwingend notwendig, sie verbessert jedoch die Ästhetik des Bewegungsvorgangs beim Verspannen in der Fahrstellung.

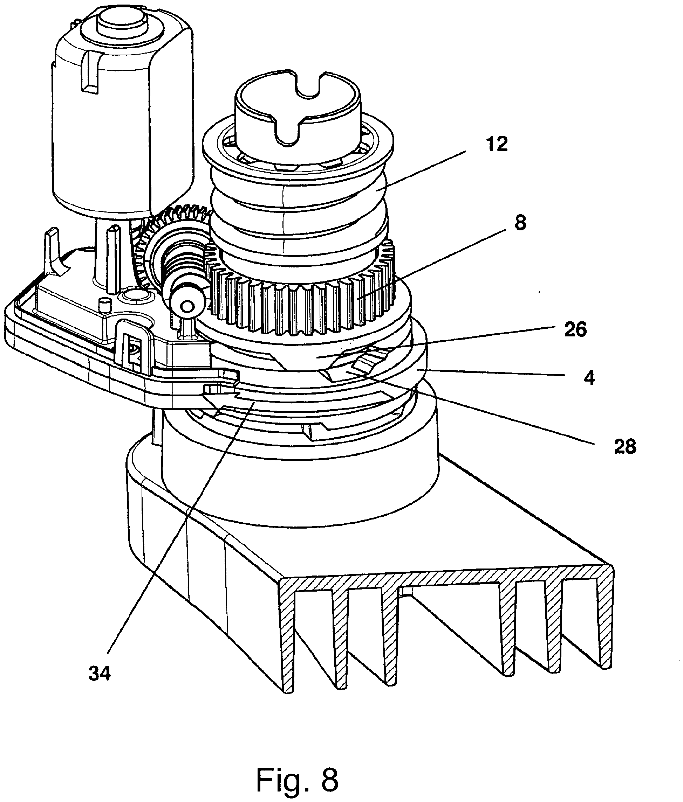

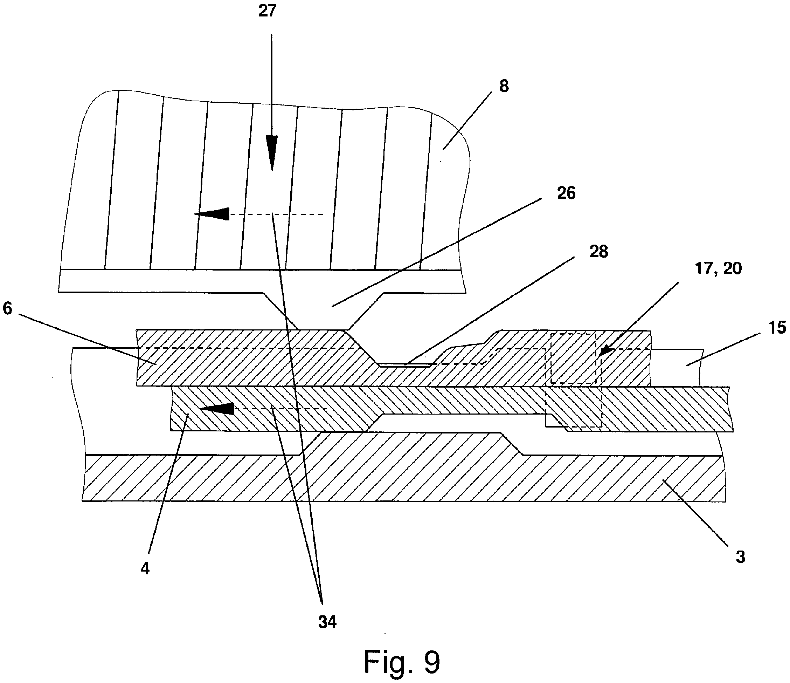

In den Fign. 8 und 9 ist der Zustand dargestellt, der auftritt, wenn ein Nutzer manuell den Spiegelkopf aus der elektrischen Beiklappstellung in die Fahrstellung ausklappen will. Dabei wird das Abtriebszahnrad 8 durch die Getriebeselbsthemmung zusammen mit dem Deckel 4, d.h. inklusive Antrieb und Spiegelkopf, mitgenommen und wird aus der Einbuchtung 28 des Verspannrings 6 bzw. aus der Vertiefung 29 des Ringansatzes über deren Schrägen auf den Verspannring 6 bewegt. Die Bewegung ist durch die Pfeile 34 dargestellt. Durch dieses Hochfahren wird die Druckfeder 12 stark vorgespannt, wodurch die Federkraft 27 nunmehr größer ist als die in den vorherigen Zuständen. Bei Erreichen der Fahrstellung verrastet der Deckel 4 wieder mit der Spiegelfußscheibe, wobei das Abtriebszahnrad 8 mit seinen Vorsprüngen 26 auf dem oberen Rand des Verspannrings 6 verbleibt. Im Falle eines manuellen Ausrastens soll somit immer gewährleistet sein, dass die Federkraft den Spiegel gegen den Spiegelfuß drückt. Die Vorsprünge 26 des Abtriebszahnrades 8 liegen daher nur am Verspannring auf und nicht gleichzeitig auf dem Ringansatz 15 der Fußscheibe 3. Dies ist auch dann der Fall, wenn der Spiegelkopf die Fahrstellung erreicht und die Verrastungskontur des Deckels 4 mit der Verrastungskontur der Fußscheibe in Eingriff gekommen ist.

Beim nächsten elektrischen Betätigen wird das Abtriebszahnrad 8 weiter gedreht, solange bis es wieder die Einbuchtung 28 am Verspannring und damit die Ausgangsstellung erreicht. Die Verrastungen zwischen Fußscheibe 3 und Deckel 4 sind im beschriebenen Ausführungsbeispiel über Vertiefungen und Erhöhungen 19, 18 realisiert, die jeweils mit Rampen versehen sind.

In einem anderen Ausführungsbeispiel gibt es die Möglichkeit, anstatt der Vertiefungen und Erhöhungen und Rampen Kugeln zu verwenden. Diese sind im Deckel 4 eingepresst und ragen ungefähr zur Hälfte aus diesem heraus. In der Spiegelfußscheibe 3 befindet sich eine kreisförmige Bahn mit Vertiefungen in der Fahrposition.

## Patentansprüche

1. Antriebsanordnung für einen Außenrückspiegel eines Fahrzeugs zum Bewegen eines Spiegelkopfes relativ zu einem mit dem Fahrzeug verbundenen Spiegelfuß aus einer Fahrstellung in eine Parkstellung und umgekehrt, umfassend:
einen mit dem Spiegelfuß (25) verbundenen feststehenden Teil,
einen mit dem Spiegelkopf verbindbaren und ein Gehäuse (5) aufweisenden, um eine Drehachse (2) beweglichen Teil, wobei der bewegliche und der feststehende Teil jeweils Verrastungskonturen (18, 19) aufweisen, die die Fahrstellung festlegen,
eine Druckfeder (12) zum Vorspannen des beweglichen und des feststehenden Teils zueinander,
einen Antrieb zum Ausführen der Bewegung zwischen dem feststehenden und dem beweglichen Teil, der zumindest einen Elektromotor (10) und
ein mit diesem in Wirkverbindung stehendes Zahnrad (8) mit Vorsprüngen (26) aufweist, **dadurch gekennzeichnet, dass**
der feststehende Teil ein Fußteil (3) mit einem dem Zahnrad (8) zugewandten Ringansatz (15) mit einer Kontur (16) umfasst,
das Gehäuse (5) eine Öffnung aufweist und zwischen Zahnrad (8) und einem die Öffnung umgebenden Gehäuseteil (4) ein drehfest mit dem Fußteil (3) verbundener, aber axial verschiebbarer Verspannring (6) mit Auflagekonturen (21) für die Vorsprünge (26) des Zahnrades (8) angeordnet ist,
wobei die Kontur (16) des Ringansatzes (15) und die Auflagekonturen (21) des Verspannrings (6) so aneinander angepasst sind, dass in der Fahrstellung die Vorsprünge (26) des Zahnrades (8) auf den Auflagekonturen (21) des Verspannrings (6) aufliegen zum Übertragen der Kraft der Druckfeder (12) über das Gehäuseteil (4) auf den feststehenden Teil für eine sichere Verrastung und wobei bei Erregen des Motors (10) zum Bewegen des Spiegelkopfes in die Parkstellung das Zahnrad (8) mit den Vorsprüngen (26) abhängig von einem Freigang des Zahnrads (8) bezüglich des Verspannringes (6) auf die Kontur (16) des Ringansatzes (15) des Fußteils (3) zur Aufnahme der Kraft der Druckfeder läuft und Verspannring (6) und Gehäuseteil (4) zum Lösen der Verrastung axial anhebbar sind.

2. Antriebsanordnung nach Anspruch 1, **dadurch gekennzeichnet, dass** das Fußteil (3) eine flanschartige, den Ringansatz (15) umgebende Scheibe (14) aufweist, wobei Verrastungskonturen (18) in der Scheibe ausgebildet sind.

3. Antriebsanordnung nach Anspruch 1 oder Anspruch 2, **dadurch gekennzeichnet, dass** an dem Ringansatz (15) des Fußteils (3) und an dem Verspannring (6) Führungselemente (17, 20) für die relative axiale, aber drehfeste Bewegung zueinander angeordnet sind.

4. Antriebsanordnung nach einem der Ansprüche 1 bis 3, **dadurch gekennzeichnet, dass** der Verspannring (6) den Ringansatz (15) umgreift.

5. Antriebsanordnung nach einem der Ansprüche 1 bis 4, **dadurch gekennzeichnet, dass** zur Aufnahme der Federkraft beim Einklappen in die und/oder Ausklappen aus der Parkstellung die Kontur (16) des Ringansatzes (15) des Fußteils (3) im Bereich des Freiganges des Zahnrades (8) auf einem in Bezug auf die Auflagekonturen (21) des Verspannrings (6) höheren Niveau liegt.

6. Antriebsanordnung nach einem der Ansprüche 1 bis 5, **dadurch gekennzeichnet, dass** die Auflagekonturen (21) des Verspannrings (6) in der Fahrposition auf einem höheren Niveau liegen als die Kontur (16) des Ringansatzes (15) des Fußteils (3).

7. Antriebsanordnung nach einem der Ansprüche 1 bis 6, **dadurch gekennzeichnet, dass** die Kontur (16) des Ringansatzes (15) mindestens eine dem Zahnrad (8) zugewandte Vertiefung (29) in dem Ringansatz (15) aufweist.

8. Antriebsanordnung nach einem der Ansprüche 1 bis 7, **dadurch gekennzeichnet, dass** die Auflagekonturen (21) des Verspannringes (6) mindestens eine dem Zahnrad (8) zugewandte abgestufte Einbuchtung (28) aufweisen.

9. Antriebsanordnung nach einem der Ansprüche 1 bis 8, **dadurch gekennzeichnet, dass** der Freigang des Zahnrades (8) durch einen Anschlag (31), der die Vertiefung (29) der Kontur (16) des Ringansatzes (15) eingrenzt, begrenzt ist.

10. Antriebsanordnung nach Anspruch 9, **dadurch gekennzeichnet, dass** beidseitig der Vertiefung (29) ein Anschlag (31, 31') ausgebildet ist.

11. Antriebsanordnung nach einem der Ansprüche 8 bis 10, **dadurch gekennzeichnet, dass** die Einbuchtung (28) in die eine Umfangsrichtung einen abgestuften Bereich mit einer sich an den Boden der Einbuchtung anschließenden geneigten Anschlagfläche (33), die in eine Stufe (35) übergeht, aufweist, wobei der Vorsprung (26) des Zahnrades (8) in der Fahrstellung sich auf der Stufe (35) abstützt.

12. Antriebsanordnung nach einem der Ansprüche 8 bis 11, **dadurch gekennzeichnet, dass** die Einbuchtung (28) in einer Umfangsrichtung eine erste Schrägfläche (37) und in der anderen Umfangsrichtung eine zweite Schrägfläche (36) aufweist, die jeweils Bestandteil einer Sicherheitskupplung in Vorklapprichtung und in Beiklapprichtung sind.

13. Antriebsanordnung nach Anspruch 11 und Anspruch 12, **dadurch gekennzeichnet, dass** die zweite Schrägfläche (36) sich an die Stufe (35) des abgestuften Bereichs anschließt.
